# EUROPEAN PATENT APPLICATION

(11) **EP 4 443 406 A1**
(43) Date of publication of application: **09.10.2024**
(21) Application number: 24158028.1
(22) Date of filing: 16.02.2024
(51) Int. Cl.: G08B 29/04, G08B 29/12, G08B 17/00, G08B 25/00

(54) **SENSOR DEVICE, DISASTER PROTECTION SYSTEM, NOTIFICATION METHOD, AND PROGRAM**

(30) Priority: 24.02.2023 JP 2023027753
(71) Applicant: Panasonic Intellectual Property Management Co., Ltd., Osaka-shi, Osaka 571-0057 (JP)
(72) Inventor: IZUTANI, Keisuke, Osaka, 571-0057 (JP); HOSHIBA, Keitaro, Osaka, 571-0057 (JP); HANAMORI, Taichi, Osaka, 571-0057 (JP); KONDO, Ayumi, Osaka, 571-0057 (JP)
(74) Representative: Appelt, Christian W.

(57) **Abstract**

An object of the present disclosure is to facilitate identification of a sensor device having an malfunction by a user. A sensor device (2) includes a sensing unit (20), an abnormality detecting unit (252) and a notifying unit (24). The sensing unit (20) is configured to sense an occurrence of a disaster, such as a fire. The abnormality detecting unit (252) is configured to detect a malfunction of the sensor device (2). The notifying unit (24) is configured to give a notification, e.g. by voice, of the identification information on the sensor device (2) when the abnormality detecting unit (252) detects the malfunction.

## Description

### Technical Field

The present disclosure generally relates to sensor devices, disaster protection systems, notification methods, and programs and specifically relates to a sensor device, a disaster protection system, a notification method, and a program which relate to disaster protection.

### Background Art

JP 2017-068523 A (hereinafter referred to as "Literature 1") describes a disaster protection monitoring system including an R-type receiver, a plurality of analog sensor devices, and a plurality of relays. The disaster protection monitoring system monitors the analog sensor devices for a failure, and when the disaster protection monitoring system detects the failure of any analog sensor device, the disaster protection monitoring system displays a failure degree of the entire system by using a system state display unit of the R-type receiver.

### Summary of Invention

The disaster protection monitoring system (disaster protection system) as described in Literature 1 merely displays the failure degree of the entire system. Therefore, a user cannot identify which analog sensor device of the plurality of analog sensor devices (sensor devices) is in failure.

In view of the foregoing, it is an object of the present disclosure to provide a sensor device, a disaster protection system, a notification method, and a program which facilitate identification of a sensor device having an abnormality by a user.

A sensor device according to an aspect of the present disclosure includes a sensing unit, an abnormality detecting unit, and a notifying unit. The sensing unit is configured to sense an occurrence of a disaster. The abnormality detecting unit is configured to detect an abnormality regarding the sensor device. The notifying unit is configured to notify of identification information on the sensor device when the abnormality detecting unit detects the abnormality.

A disaster protection system according to an aspect of the present disclosure includes the sensor device, a receiver, and a relay. The receiver is configured to perform communication with the sensor device to receive a detection result of a disaster. The relay is configured to relay the communication between the sensor device and the receiver.

A notification method according to an aspect of the present disclosure is a method to be applied to a sensor device. The sensor device is configured to sense an occurrence of a disaster. The notification method includes an abnormality detecting step and a notifying step. The abnormality detecting step includes detecting an abnormality regarding the sensor device. The notifying step includes notifying of identification information on the sensor device when the abnormality is detected in the abnormality detecting step.

A program according to an aspect of the present disclosure is a program configured to cause one or more processors to execute the notification method.

### Brief Description of Drawings

FIG. 1 is a schematic diagram of a configuration of a disaster protection system according to an embodiment;
FIG. 2 is a block diagram of a sensor device included in the disaster protection system;
FIG. 3 is a block diagram of a receiver included in the disaster protection system;
FIG. 4 is a block diagram of a relay included in the disaster protection system;
FIG. 5 is a sequence diagram of an example of operation of the disaster protection system;
FIG. 6 is a sequence diagram of another example of the operation of the disaster protection system; and
FIG. 7 is a flowchart of the operation of the disaster protection system.

### Description of Embodiments

A preferable embodiment of the present disclosure will be described in detail below with reference to the drawing. Note that components common in the embodiment described below are denoted by the same reference signs, and duplicate description thereof may be omitted. The embodiment described below is a mere example of various embodiments of the present disclosure. The embodiment may be modified variously depending on design and the like as long as the object of the present disclosure is achieved. Moreover, the embodiment (including variations) may accordingly be implemented in combination.

The drawings to be referred to in the following description of the embodiment are all schematic representations. That is to say, the ratio of the dimensions (including thicknesses) of respective constituent elements illustrated on the drawings does not always reflect their actual dimensional ratio.

### (1) Overview

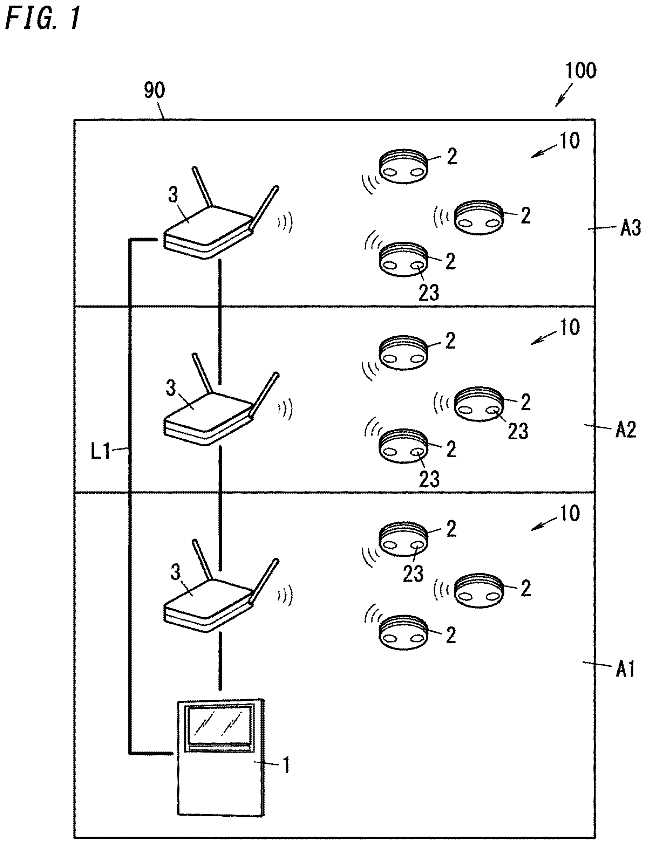

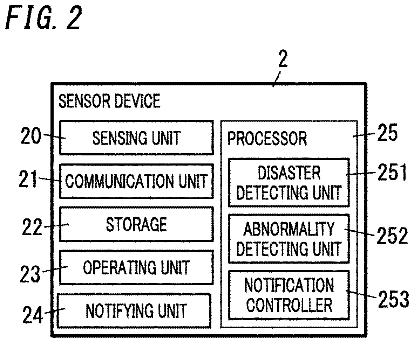

First of all, the overview of a disaster protection system 100 according to the present embodiment will be described with reference to FIGS. 1 and 2.

As shown in FIG. 1, a sensor device 2 (detector) of the present embodiment is applied to the disaster protection system 100. The disaster protection system 100 is a system for coping with a disaster in a facility 90 such as an office building. As used in the present disclosure, "disaster protection" includes, for example, prevention of damage by a disaster such as a fire from spreading, prevention of a disaster such as a fire, restoration from the disaster, or the like. As used in the present disclosure, "disaster" may include, for example, a fire, gas leakage, earthquake, and water immersion.

The disaster protection system 100 of the present embodiment is configured as an automatic fire alarm system to be introduced into, in particular, the facility 90. When, for example, detecting the presence of a fire, the automatic fire alarm system notifies a user or the like in the facility 90 of the presence of the fire. The facility 90 may be a theater, a movie theater, a public assembly hall, a recreation hall, a complex facility, a restaurant, a department store, a school, a hotel, an inn, a hospital, a nursing home, a kindergarten, a library, a museum, an art museum, a underground mall, a station, an airport, or a multiple dwelling house, or the like other than the office building.

As shown in FIG. 2, the sensor device 2 of the present embodiment includes a sensing unit 20, a disaster detecting unit 251, and a notifying unit 24.

The sensing unit 20 senses the occurrence of a disaster.

The abnormality detecting unit 252 detects an abnormality regarding the sensor device 2.

The notifying unit 24 notifies of identification information on the sensor device 2 when the abnormality detecting unit 252 detects the abnormality.

The abnormality of the sensor device 2 includes a failure of each of components such as the sensing unit 20 included in the sensor device 2. Moreover, the abnormality of the sensor device 2 includes a communication abnormality which is an abnormality relating to communication with a relay 3 or a receiver 1 which is another device. The communication abnormality includes a failure of a communication unit 21 included in the sensor device 2 or an abnormality caused by the radio wave intensity of wireless communication. Note that as used in the present disclosure, the "abnormality" does not mean a disaster.

The identification information on the sensor device 2 is information which is, for example, a media access control (MAC) address, an internet protocol (IP) address, an item number, or a registered number. The registered number is the number with reference to which the receiver 1 (see FIG. 1) or the relay 3 (see FIG. 1) manages the sensor device 2. Note that the registered number may include a character such as an alphabet in addition to a numerical digit(s).

For example, conventionally, a user checks identification information on a sensor device having an abnormality with reference to a notification by a receiver and goes to a site where the plurality of sensor devices have been installed. Then, the user checks a floor plan or the like of the site to find the sensor device having the abnormality out of the plurality of sensor devices installed in the site. In the disaster protection system 100 of the present embodiment, the sensor device 2 notifies of the identification information on the sensor device 2 when the sensor device 2 detects an abnormality of the sensor device 2, thereby facilitating identification of the sensor device having the abnormality by a user as compared with the conventional case.

### (2) Details

A detailed configuration of the disaster protection system 100 according to the present embodiment will be described below with reference to FIGS. 1 to 4.

### (2.1) Overall Structure

As shown in FIG. 1, the disaster protection system 100 includes the receiver 1, the sensor device 2, and the relay 3.

The receiver 1 and the relay 3 of the present embodiment are connected via a transmission line L1 which is of a two-wire type. The receiver 1 and the relay 3 perform wired communication via the transmission line L1. Note that the disaster protection system 100 may be configured such that the receiver 1 and the relay 3 perform wireless communication via a radio wave. The relay 3 and the sensor device 2 perform wireless communication via a radio wave.

As shown in FIG. 1, the disaster protection system 100 of the present embodiment includes a plurality of (in the example in FIG. 1, three) relays 3. Moreover, a plurality of sensor devices 2 are registered at each of the plurality of relays 3. Each relay 3 and the plurality of sensor devices 2 registered at a corresponding one of the relays 3 are arranged such that they can wirelessly communicate with each other.

The plurality of relays 3 are arranged in a distributed manner, for example, on different floors of the facility 90. In the example in FIG. 1, in an area A1 of a first floor (ground floor) of the facility 90, one (first) relay 3 of the plurality of relays 3 and a plurality of (three) sensor devices 2 which wirelessly communicate with the first relay 3 are arranged. Moreover, in the example in FIG. 1, in an area A2 of a second floor of the facility 90, another (second) relay 3 of the plurality of relays 3 and a plurality of (three) sensor devices 2 which wirelessly communicate with the second relay 3 are disposed. Further, in the example in FIG. 1, in an area A3 of a third floor of the facility 90, still another (third) relay 3 of the plurality of relays 3 and a plurality of (three) sensor devices 2 which wirelessly communicate with the third relay 3 are disposed.

The plurality of relays 3 use respective channels different from each other to wirelessly communicate with the sensor devices 2. Thus, each sensor device 2 wirelessly communicates with only a corresponding relay 3 of the plurality of relays 3.

In the following description, of the plurality of relays 3 and the plurality of sensor devices 2 included in the disaster protection system 100, one relay 3 and a plurality of sensor devices 2 which wirelessly communicate with the one relay 3 are referred to as a "communication system 10", and description is given focusing on one communication system 10. In the example in FIG. 1, the disaster protection system 100 includes three communication systems 10.

Note that although not shown in the figure, the disaster protection system 100 further includes, for example, a transmitter, notification devices (regional acoustic devices, light warning devices, emergency broadcasting devices), and an emergency call system. Moreover, the disaster protection system 100 may further include a wired sensor device configured to perform wired communication with the relay 3.

### (2.2) Configuration of Receiver

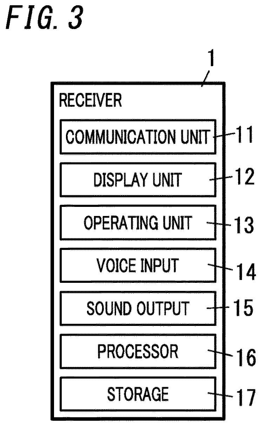

As shown in FIG. 3, the receiver 1 includes a communication unit 11, a display unit 12, an operating unit 13, a voice input 14, a sound output 15, a processor 16, and a storage 17.

The communication unit 11 includes a communication interface for wired communication, and the communication interface is connected to the transmission line L1. The communication unit 11 is connected to the plurality of relays 3 via the transmission line L1. The receiver 1 may include a communication interface for wired or wireless communication, and the communication interface is connected to, for example, an external server.

The display unit 12 includes, for example, a liquid crystal panel display, an indicator, or a 7-segment display. The display unit 12 is configured to display various pieces of information. The display unit 12 displays, for example, a place in a facility 90 where a sensor device 2 which has transmitted a fire signal to the receiver 1 is installed, and information regarding the fire signal. Moreover, the display unit 12 of the present embodiment is controlled by the processor 16 to notify of a sensor device 2 having an abnormality. For example, the display unit 12 displays a place in the facility 90 where the sensor device 2 having the abnormality is installed, and identification information on the sensor device 2 having the abnormality.

The operating unit 13 includes various devices for receiving operations given by a user (e.g., an administrator of the facility 90) of the disaster protection system 100. The operating unit 13 includes, for example, various switches (button switches, dip switches, etc.) and a touch panel integrated with the display of the display unit 12.

The voice input 14 receives an input of a sound of a surrounding environment. The voice input 14 includes, for example, a microphone and receives an input of a voice of a user of the disaster protection system 100. The voice input to the voice input 14 is output, for example, from a loudspeaker of the emergency broadcasting devices installed in various places in the facility 90.

The sound output 15 includes, for example, a loudspeaker and outputs various sounds. The sound output 15 outputs, for example, an artificial voice, a beep, or the like stored in memory in response to reception of the fire signal from a sensor device 2. Moreover, the sound output 15 of the present embodiment is controlled by the processor 16 to notify of a sensor device 2 having an abnormality. For example, the sound output 15 outputs a voice for notifying of the place in the facility 90 where the sensor device 2 having the abnormality is installed and the identification information on the sensor device 2 having the abnormality.

The storage 17 stores various pieces of information. The storage 17 is semiconductor memory such as read only memory (ROM), random access memory (RAM), or electrically erasable programmable read only memory (EEPROM). Note that the storage 17 is not limited to the semiconductor memory but may be, for example, a hard disk drive. The storage 17 may also be used as memory of the processor 16. The storage 17 stores map information on the facility 90, location information and identification information on each relay 3, and location information and identification information on each sensor device 2.

The processor 16 may be implemented by, for example, a computer system including one or more processors (microprocessors) and one or more memory elements. The one or more processors execute one or more programs stored in the one or more memory elements, thereby functioning as the processor 16. Here, the program(s) is stored in the memory element(s) of the processor 16 in advance but may be provided over a telecommunications network such as the Internet or may be provided as a non-transitory recording medium such as a memory card storing the program(s).

The processor 16 controls operation of the receiver 1. That is, the processor 16 controls operation of the communication unit 11, the display unit 12, the operating unit 13, the voice input 14, the sound output 15, and the storage 17.

The processor 16 receives the fire signal from a sensor device 2 via the relay 3. That is, the processor 16 controls the communication unit 11 to communicate with the sensor device 2, thereby receiving a detection result of a disaster.

The processor 16 of the present embodiment determines whether or not a sensor device 2 has an abnormality. In other words, the processor 16 detects the abnormality of the sensor device 2. For example, when the processor 16 receives abnormality information transmitted from the sensor device 2 via the relay 3, the processor 16 detects the abnormality of the sensor device 2 which has transmitted the abnormality information.

Moreover, the processor 16 regularly communicates with the relay 3 to perform an existence confirmation (keep alive process). Specifically, a processor 34 controls the communication unit 11 to transmit a confirmation signal to the relay 3 and to receive a response signal from the relay 3.

The processor 16 determines, based on the response signal received from the relay 3, whether or not the sensor device 2 has a communication abnormality. If the response signal received from the relay 3 includes identification information on a sensor device 2 for which the existence confirmation has not been accomplished, the processor 16 detects the communication abnormality of the sensor device 2 for which the existence confirmation has not been accomplished.

When the processor 16 detects the abnormality of the sensor device 2, the processor 16 causes the display unit 12 and the sound output 15 to give notification.

Moreover, when the processor 16 detects the abnormality of the sensor device 2, the processor 16 controls the communication unit 11 to transmit a command signal, for causing the sensor device 2 to give notification, via the relay 3 to the sensor device 2. The processor 16 transmits the command signal at an arbitrary transmission timing. The transmission timing may be set, for example, based on the distance between a room, such as a caretaker's room, where the receiver 1 is installed and a room where the sensor device 2 having the abnormality is installed. For example, the longer the distance is, the later timing the processor 16 sets as the transmission timing. Moreover, the transmission timing may be set by a user. According to the disaster protection system of the present embodiment, the transmission timing of the command signal is accordingly set, and therefore, it becomes possible to cause the sensor device 2 to give notification, for example, at a timing at which a user will reach the room where the sensor device 2 is installed, thereby reducing meaningless notification by the sensor device 2. Note that the processor 16 of the present embodiment forgoes transmission of the command signal when detecting the communication abnormality of the sensor device 2.

### (2.3) Configuration of Relay

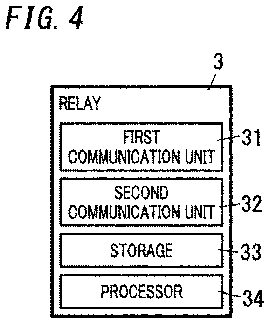

As shown in FIG. 4, the relay 3 includes a first communication unit 31, a second communication unit 32, a storage 33, and the processor 34.

The first communication unit 31 includes a communication interface for wireless communication with the external device (sensor device 2). The first communication unit 31 includes an antenna, a communication circuit, and the like.

The second communication unit 32 includes a communication interface for wired communication, and the communication unit is connected to the transmission line L1. The second communication unit 32 is connected to the receiver 1 via the transmission line L1.

The storage 33 stores various pieces of information. The storage 33 is semiconductor memory such as ROM, RAM, or EEPROM. Note that the storage 33 is not limited to the semiconductor memory but may be, for example, a hard disk drive. The storage 33 may be used also as memory of the processor 34. The storage 33 stores pieces of identification information on the sensor devices 2 registered.

The processor 34 may be implemented by, for example, a computer system including one or more processors (microprocessors) and one or more memory elements The one or more processors execute one or more programs stored in the one or more memory elements, thereby functioning as the processor 34. Here, the program(s) is stored in the memory element(s) of the processor 34 in advance but may be provided over a telecommunications network such as the Internet or may be provided as a non-transitory recording medium such as a memory card storing the program(s).

The processor 34 controls operation of the relay 3. That is, the processor 34 controls operation of the first communication unit 31, the second communication unit 32, and the storage 33.

The processor 34 controls the first communication unit 31 and the second communication unit 32 to receive the fire signal from a sensor device 2 registered and to transmit the fire signal thus received to the receiver 1. That is, the processor 34 controls the first communication unit 31 and the second communication unit 32 to relay communication between each sensor device 2 registered and the receiver 1.

Moreover, the processor 34 regularly communicates with the sensor devices 2 to perform the existence confirmation. Specifically, the processor 34 controls the first communication unit 31 to receive a confirmation signal from each sensor device 2 and to transmit a response signal to each sensor device 2.

Moreover, as described above, the processor 34 regularly communicates with the receiver 1 to perform the existence confirmation. Specifically, the processor 34 controls the second communication unit 32 to receive a confirmation signal from the receiver 1 and to transmit a response signal to the receiver 1. When the processor 34 of the present embodiment receives the confirmation signal from the receiver 1, the processor 34 determines whether or not there is a sensor device 2 for which the existence confirmation has not been accomplished. The sensor device 2 for which the existence confirmation has not been accomplished means a sensor device 2 which has not transmitted the confirmation signal in the most recent existence confirmation. If there is the sensor device 2 for which the existence confirmation has not been accomplished, The processor 34 transmits, to the receiver 1, a response signal including identification information on the sensor device 2 for which the existence confirmation has not been accomplished.

Moreover, the processor 34 of the present embodiment controls the first communication unit 31 and the second communication unit 32 to receive the abnormality information form a sensor device 2 and to transmit the abnormality information thus received to the receiver 1.

Moreover, the processor 34 of the present embodiment controls the first communication unit 31 and the second communication unit 32 to receive the command signal from the receiver 1 and to transmit the command signal thus received to the sensor device 2.

### (2.4) Configuration of Sensor Device

As shown in FIG. 2, each sensor device 2 includes the sensing unit 20, the communication unit 21, a storage 22, an operating unit 23, the notifying unit 24, and a processor 25.

The sensing unit 20 includes a sensor for detecting a specific physical quantity regarding a disaster. The sensor is, for example, a heat sensor, a smoke sensor, an infrared sensor, or an ultraviolet sensor. The specific physical quantity detected by the sensor is, for example, heat (temperature), smoke (fine particle) concentration, ultraviolet intensity, or infrared intensity. That is, the sensor device 2 may be a so-called heat sensor device including a heat sensor to sense heat (a temperature rise) caused by a fire. The sensor device 2 may be a so-called smoke sensor device including a smoke sensor to sense smoke or a fine burned product caused by a fire. the sensor device 2 may be a so-called flame sensor device including an infrared sensor or an ultraviolet sensor and configured to sense a flame caused by a fire. The sensor device 2 may be a so-called complex sensor device including two or more types of sensors, for example, a heat sensor and a smoke sensor each configured to detect a physical quantity. Note that the sensing unit 20 may further include a sensor for sensing an abnormality in the facility other than the fire, such as a gas leakage, earthquake, water immersion, or the like. In the present embodiment, the sensing unit 20 includes a heat sensor. In the present embodiment, the heat sensor is, for example, a thermistor.

The communication unit 21 includes a communication interface for wireless communication with another device (the relay 3 or another sensor device 2). The communication unit 21 includes an antenna, a communication circuit, and the like.

The storage 22 stores various pieces of information. The storage 22 is semiconductor memory such as ROM, RAM, or EEPROM. Note that the storage 22 is not limited to the semiconductor memory but may be, for example, a hard disk drive. The storage 22 may be used also as memory of the processor 25. The storage 22 stores the identification information on the sensor device 2.

The operating unit 23 receives an operation input given by a user. The operating unit 23 includes, for example, an operation button to which an operation is given by the user. The operation button of the present embodiment includes a notification button. When the notification button is pressed by the user, the sensor device 2 notifies of the identification information on the sensor device 2. Note that in the following description, pressing the notification button by a user is also referred to as a "predetermined operation".

The notifying unit 24 notifies of various types of information in response to control by a notification controller 253 of the processor 25. The notifying unit 24 notifies of the occurrence of a disaster when the disaster detecting unit 251 detects the occurrence of the disaster. Moreover, the notifying unit 24 notifies of identification information when the abnormality detecting unit 252 detects an abnormality.

In the present embodiment, the notifying unit 24 includes a loudspeaker. The notifying unit 24 of the present embodiment outputs a sound which notifies of the occurrence of the disaster when the disaster detecting unit 251 detects the occurrence of the disaster. The sound which notifies of the occurrence of the disaster includes a voice and an alarm sound which notify of the occurrence of the disaster. Moreover, the notifying unit 24 of the present embodiment outputs a voice which notifies of the identification information when the abnormality detecting unit 252 detects the abnormality. Since the notifying unit 24 notifies of the identification information by voice, the sensor device 2 having the abnormality is more easily identifiable by a user.

The processor 25 may be implemented by, for example, a computer system including one or more processors (microprocessors) and one or more memory elements. The one or more processors execute one or more programs stored in the one or more memory elements, thereby functioning as the processor 25. Here, the program(s) is stored in the memory element(s) of the processor 25 in advance but may be provided over a telecommunications network such as the Internet or may be provided as a non-transitory recording medium such as a memory card storing the program(s).

The processor 25 controls the operation of the sensor device 2. That is, the processor 25 controls operation of the sensing unit 20, the communication unit 21, the storage 22, the operating unit 23, and the notifying unit 24.

As shown in FIG. 2, the processor 25 includes the disaster detecting unit 251, an abnormality detecting unit 252, and the notification controller 253. The disaster detecting unit 251, the abnormality detecting unit 252, and the notification controller 253 represent functions implemented by the processor 25.

The disaster detecting unit 251 determines, based on a physical quantity (or its change amount) detected by the sensing unit 20, whether or not a disaster such as a fire has occurred. The disaster detecting unit 251 compares the physical quantity thus detected with a threshold, and if the physical quantity exceeds the threshold, the disaster detecting unit 251 determines that the disaster has occurred. In other words, the disaster detecting unit 251 compares the physical quantity thus detected with the threshold, and if the physical quantity exceeds the threshold, the disaster detecting unit 251 detects the occurrence of the disaster. When the disaster detecting unit 251 of the present embodiment detects the presence of the fire, the disaster detecting unit 251 controls the communication unit 21 to wirelessly transmit the fire signal (a signal which notifies of the presence of the fire). The fire signal includes the identification information on the sensor device 2.

The abnormality detecting unit 252 detects the abnormality regarding the sensor device 2. For example, the abnormality detecting unit 252 detects, based on the physical quantity (or its change amount) detected by the sensing unit 20, the abnormality regarding the sensor device 2. More specifically, the abnormality detecting unit 252 detects, based on whether or not the physical quantity detected by the sensing unit 20 is within a predetermined range, the abnormality regarding the sensor device 2.

The abnormality detecting unit 252 of the present embodiment determines whether or not the resistance value of the thermistor of the sensing unit 20 is within the predetermined range, and if the resistance value of the thermistor is out of the predetermined range, the abnormality detecting unit 252 detects the abnormality. Note that the abnormality detecting unit 252 of the present embodiment forgoes detection of the abnormality if the resistance value of the thermistor is within the predetermined range.

The abnormality detecting unit 252 regularly communicate with the relay 3 to perform the existence confirmation. Specifically, the processor 25 controls the communication unit 21 to transmit a confirmation signal to the relay 3 and to receive a response signal from the relay 3.

The abnormality detecting unit 252 detects a communication abnormality if the response signal is not received from the relay 3 in the existence confirmation regularly performed between the abnormality detecting unit 252 and the relay 3. Specifically, if the abnormality detecting unit 252 receives no response signal after a predetermined time has elapsed since the transmission of the confirmation signal, the abnormality detecting unit 252 detects the communication abnormality.

If the abnormality detecting unit 252 detects the abnormality regarding the sensor device 2, the abnormality detecting unit 252 transmits the abnormality information representing the detection of the abnormality to the receiver 1 via the relay 3. The abnormality information at least includes the identification information on the sensor device 2. The abnormality information may include information representing the place of the occurrence of the abnormality, the contents of the abnormality, and the like. Note that the abnormality detecting unit 252 of the present embodiment forgoes transmission of the abnormality information if the abnormality detecting unit 252 detects the communication abnormality.

Moreover, when the abnormality detecting unit 252 of the present embodiment detects the communication abnormality, the abnormality detecting unit 252 performs a restoration determining process of determining whether or not the communication abnormality is resolved after the notifying unit 24 notifies of the identification information. For example, the abnormality detecting unit 252 transmits the confirmation signal to the relay 3 and checks whether or not the relay 3 returns the response signal. If the response signal is returned from the relay 3, the abnormality detecting unit 252 determines that the communication abnormality is resolved. In contrast, if no response signal is returned from the relay 3, the abnormality detecting unit 252 determines that the communication abnormality is not resolved.

The notification controller 253 controls the operation of the notifying unit 24. When the abnormality detecting unit 252 detects an abnormality and receives the command signal from the receiver 1 via the relay 3, the notification controller 253 of the present embodiment causes the notifying unit 24 to notify of the identification information. That is, the notifying unit 24 of the present embodiment notifies of the identification information when the abnormality detecting unit 252 detects the abnormality and receives the command signal from the receiver 1 which is another device.

Moreover, when the abnormality detecting unit 252 detects the abnormality and a predetermined operation is given to the operating unit 23, the notification controller 253 of the present embodiment causes the notifying unit 24 to notify of the identification information. After a user arrives at a room where the sensor device 2 is installed, the notifying unit 24 is caused to give notification, thereby reducing meaningless notification by the sensor device 2.

When a predetermined time has elapsed since the notification controller 253 caused the notifying unit 24 to give the notification, or when a user gives an operation for terminating the notification to the operating unit 23, the notification controller 253 causes the notifying unit 24 to terminate the notification.

Moreover, if it is determined that the communication abnormality is not resolved in the restoration determining process performed by the abnormality detecting unit 252, the notification controller 253 of the present embodiment causes the notifying unit 24 to notify of the identification information again. This can notify a user that the communication abnormality has not been resolved.

### (3) Operation of Disaster Protection System

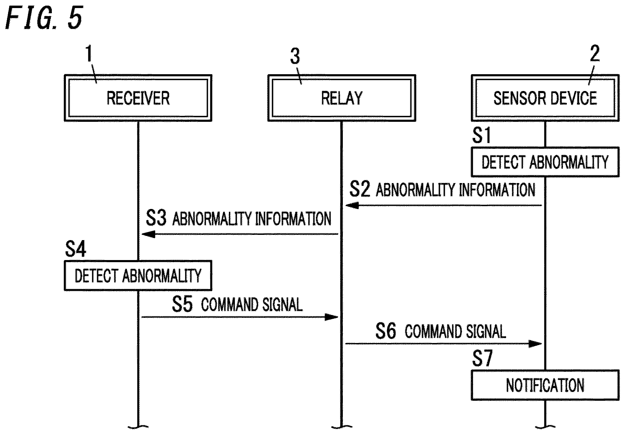

Next, referring to FIGS. 5 to 7, the operation of the disaster protection system 100 will be described.

FIG. 5 is a sequence diagram of the operation of the disaster protection system 100 when a sensor device 2 transmits the abnormality information. When the sensor device 2 detects an abnormality regarding the sensor device 2 (S1), the sensor device 2 transmits the abnormality information to the relay 3 (S2). When the relay 3 receives the abnormality information, the relay 3 transmits the abnormality information thus received to the receiver 1 (S3). When the receiver 1 receives the abnormality information from the relay 3, the receiver 1 detects the occurrence of an abnormality in the sensor device 2 corresponding to the identification information included in the abnormality information (S4). The receiver 1 transmits, to the relay 3, the command signal for causing the sensor device 2 having the abnormality to give notification (S5). When the relay 3 receives the command signal from the receiver 1, the relay 3 transmits the command signal thus received to the sensor device 2 which has transmitted the abnormality information (S6). When the sensor device 2 receives the command signal, the sensor device 2 notifies of identification information on the sensor device 2 (S7).

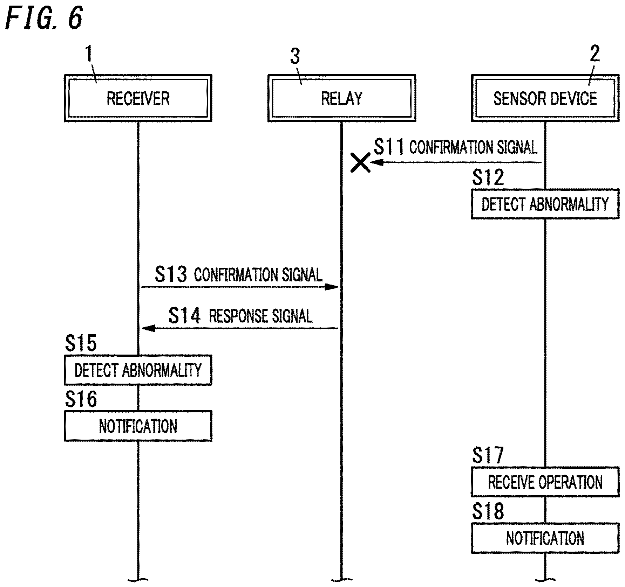

FIG. 6 is a sequence diagram of the operation of the disaster protection system 100 in the case where a sensor device 2 detects the communication abnormality. As described above, the sensor devices 2 regularly perform the existence confirmation with the relay 3. The sensor device 2 transmits a confirmation signal to the relay 3 (S11). Here, in the example in FIG. 6, for example, due to an abnormality resulting from radio wave intensity of the wireless communication, the confirmation signal is not received by the relay 3. Since the relay 3 does not receive the confirmation signal from the sensor device 2, the relay 3 transmits no response signal to the sensor device 2. The sensor device 2 receives still no response signal after a predetermined time has elapsed since the sensor device 2 transmitted the confirmation signal, and therefore, the sensor device 2 detects the communication abnormality (S12).

Moreover, as described above, the receiver 1 regularly performs the existence confirmation between the receiver 1 and the relay 3. The receiver 1 transmits a confirmation signal to the relay 3 (S13). When the relay 3 receives the confirmation signal from the receiver 1, the relay 3 transmits a response signal to the receiver 1 (S14). Here, the relay 3 has not performed the existence confirmation of the sensor device 2, the relay 3 transmits, to the receiver 1, a response signal including the identification information on the sensor device 2 for which the existence confirmation has not been accomplished (S14). When the receiver 1 receives the response signal, the receiver 1 detects, based on the identification information included in the response signal, the communication abnormality of the sensor device 2 (S15). Then, the receiver 1 notifies of, for example, a place in the facility 90 where the sensor device 2 for which the existence confirmation has not been accomplished is installed (S16).

Based on the notification by the sensor device 2, a user identify the occurrence of an abnormality in the sensor device 2 and the place in the facility 90 where the sensor device 2 is installed. The user goes to the place where the sensor device 2 is installed, and the user gives the predetermined operation to the operating unit 23. When the sensor device 2 receives the predetermined operation to the operating unit 23 (S17), the sensor device 2 notifies of identification information on the sensor device 2. The user can identify, based on the notification given by the sensor device 2, the sensor device 2 having the abnormality.

Note that the sequence diagrams shown in FIGS. 5 and 6 are mere examples, and the order of steps may accordingly be changed, or a process(es) may accordingly be added or deleted.

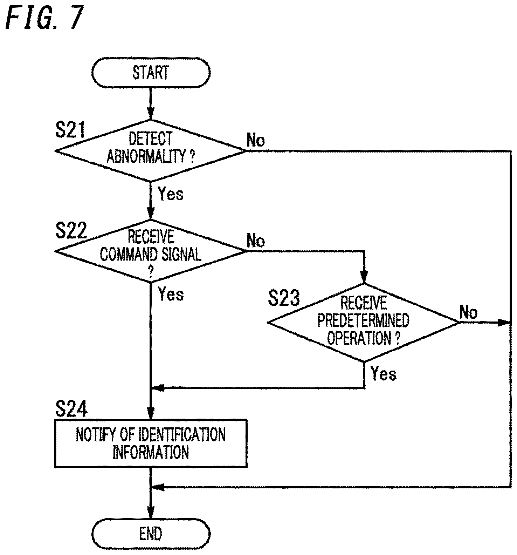

FIG. 7 is a flowchart of a process of a notification method performed by each sensor device 2 of the disaster protection system 100. The process shown in FIG. 7 is regularly performed by the processor 25 of each sensor device 2. First of all, the sensor device 2 determines whether or not an abnormality regarding the sensor device 2 is detected (S21). If the sensor device 2 detects no abnormality (S21: No), the sensor device 2 terminates the process. In contrast, if the sensor device 2 detects the abnormality (S21: Yes), the sensor device 2 determines whether or not the sensor device 2 has received the command signal transmitted from the receiver 1 (S22). If the sensor device 2 has received the command signal (S22: Yes), the sensor device 2 notifies of the identification information on the sensor device 2 (S24) and terminates the process. In contrast, if the sensor device 2 has not received the command signal (S22: No), the sensor device 2 determines whether or not the sensor device 2 has received the predetermined operation given by a user (S23). If the sensor device 2 has not received the predetermined operation (S23: No), the sensor device 2 terminates the process. In contrast, if the sensor device 2 has received the predetermined operation (S23: Yes), the sensor device 2 gives the notification of the identification information on the sensor device 2 (S24) and terminates the process.

Note that the flowchart shown in FIG. 7 is a mere example, and the order of steps may accordingly be changed, or a process(es) may accordingly be added or deleted.

### (4) Variations

Variations of the above-described embodiment will be described below.

A function similar to the disaster protection system 100 according to the above-described embodiment may be implemented by a notification method, a (computer)program, a non-transitory recording medium storing the program, or the like. The notification method according to an aspect is a method applied to the sensor device 2. The sensor device 2 senses the occurrence of a disaster. The notification method includes an abnormality detecting step and a notifying step. The abnormality detecting step includes detecting an abnormality regarding the sensor device 2. The notifying step includes notifying of the identification information on the sensor device 2 when the abnormality is detected in the abnormality detecting step. The program according to an aspect is a program for causing one or more processors to execute the notification method.

The disaster protection system 100 or a main body which executes the notification method of the present disclosure includes a computer system. The computer system may include a processor and memory as principal hardware components thereof. The processor executes a program stored in the memory of the computer system, thereby implementing a function as the disaster protection system 100 or the main body which executes the notification method of the present disclosure. The program may be stored in advance in the memory of the computer system. Alternatively, the program may also be downloaded over a telecommunications network or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI).As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

Also, in the embodiment described above, the plurality of functions of the disaster protection system 100 are aggregated together in a single housing, for example, the sensor device 2. However, this is not an essential configuration for the disaster protection system 100. Alternatively, the components of the disaster protection system 100 may be distributed in a plurality of different housings. Still alternatively, at least some functions of the disaster protection system 100, for example, some functions of the sensor device 2, may be implemented as a cloud computing system as well.

In contrast, at least some functions of the disaster protection system 100 which are distributed in a plurality of devices in the embodiment described above may be aggregated together in a single housing. For example, some functions of the disaster protection system 100 which are distributed in the receiver 1 and the sensor devices 2 may be aggregated together in a single housing.

The notifying unit 24 may include a display unit alternatively to, or in addition to, the loudspeaker. The display unit is, for example, a liquid crystal panel display or a seven-segment display. The display unit displays, based on control by the notification controller 253, the identification information on the sensor device 2.

When the sensing unit 20 includes a smoke sensor including a light receiving element, the abnormality detecting unit 252 determines whether or not the quantity of received light (the magnitude of an output signal) of the light receiving element is within a predetermined range, and if the quantity of received light of the light receiving element is out of the predetermined range, the abnormality detecting unit 252 detects the abnormality.

At a timing at which the abnormality detecting unit 252 detects the abnormality, the notification controller 253 may cause the notifying unit 24 to give notification of the identification information. That is, the abnormality detecting unit 252 may cause the notifying unit 24 to notify of the identification information regardless of whether or not the command signal is received from the receiver 1 which is another device. Similarly, the abnormality detecting unit 252 may cause the notifying unit 24 to notify of the identification information regardless of whether or not the predetermined operation is given to the operating unit 23.

The processor 25 of the sensor device 2 does not have to include the disaster detecting unit 251. In this case, for example, the receiver 1 may have a function of the disaster detecting unit 251, the sensor device 2 may transmit the physical quantity detected by the sensing unit 20 via the relay 3 to the receiver 1, and the receiver 1 may determine, based on the physical quantity thus received, a disaster such as a fire.

### (Summary)

As can be seen from the embodiment described above, a sensor device (2) according to a first aspect includes a sensing unit (20), an abnormality detecting unit (252), and a notifying unit (24). The sensing unit (20) is configured to sense an occurrence of a disaster. The abnormality detecting unit (252) is configured to detect an abnormality regarding the sensor device 2. the notifying unit (24) is configured to give notification of identification information on the sensor device 2 when the abnormality detecting unit (252) detects the abnormality.

This aspect facilitates identification of the sensor device (2) having the abnormality by a user.

A sensor device (2) according to a second aspect referring to the first aspect further includes a communication unit (21). The communication unit (21) is configured to perform communication with another device (receiver 1; relay 3). The notifying unit (24) is configured to notify of the identification information when the abnormality detecting unit (252) detects the abnormality and receives a command signal from the another device.

This aspect enables meaningless notification by the sensor device (2) to be reduced.

A sensor device (2) of a third aspect referring to any one of the first or second aspect further includes an operating unit (23). The operating unit (23) is configured to receive an operation given by a user. The notifying unit (24) gives the notification of the identification information when the abnormality detecting unit (252) detects the abnormality and a predetermined operation is given to the operating unit (23).

This aspect enables meaningless notification by the sensor device (2) to be reduced.

In a sensor device (2) according to a fourth aspect referring to any one of the first to third aspects, the notifying unit (24) is configured to notify of the identification information by voice.

With this aspect, the notifying unit (24) gives the notification of the identification information by voice, thereby further facilitating identification of the sensor device (2) having the abnormality by a user.

A sensor device (2) of a fifth aspect referring to any one of the first to fifth aspects further includes a communication unit (21). The communication unit (21) is configured to perform the communication with the another device (receiver 1; relay 3). the abnormality detecting unit (252) is configured to, when the abnormality detecting unit (252) detects the abnormality regarding the communication with the another device, determine whether or not the abnormality regarding the communication is resolved after the notifying unit (24) gives the notification of the identification information.

With this aspect, the notification is further given, for example, when the communication abnormality is not resolved, thereby notifying a user that the communication abnormality is not resolved.

Configurations other than the configuration of the first aspect are not essential configurations for the sensor device (2) and are thus accordingly omittable.

A disaster protection system (100) of a sixth aspect includes the sensor device (2) of any one of the first to fifth aspect, a receiver (1), and a relay (3). The receiver (1) is configured to perform communication with the sensor device (2) to receive a detection result of the disaster. The relay (3) is configured to relay the communication between the sensor device (2) and the receiver (1).

This aspect facilitates identification of the sensor device (2) having the abnormality by a user.

A notification method of a seventh aspect is a method to be applied to a sensor device (2). The sensor device (2) is configured to sense an occurrence of a disaster. The notification method includes an abnormality detecting step and a notifying step. The abnormality detecting step includes detecting an abnormality regarding the sensor device (2). The notifying step includes notifying of identification information on the sensor device (2) when the abnormality is detected in the abnormality detecting step.

This aspect facilitates identification of the sensor device (2) having the abnormality by a user.

A program of an eighth aspect is a program configured to cause one or more processors to execute the notification method of the seventh aspect.

This aspect facilitates identification of the sensor device (2) having the abnormality by a user.

### Reference Signs List

- 1: Receiver
- 100: Disaster Protection System
- 2: Sensor Device
- 20: Sensing Unit
- 21: Communication Unit
- 23: Operating Unit
- 24: Notifying Unit
- 252: Abnormality Detecting Unit
- 3: Relay

## Claims

1. A sensor device (2) comprising:
a sensing unit (20) configured to sense an occurrence of a disaster;
an abnormality detecting unit (252) configured to detect an abnormality regarding the sensor device (2); and
a notifying unit (24) configured to give notification of identification information on the sensor device (2) when the abnormality detecting unit (252) detects the abnormality.

2. The sensor device (2) of claim 1, further comprising a communication unit (21) configured to perform communication with another device, wherein
the notifying unit (24) is configured to notify of the identification information when the abnormality detecting unit (252) detects the abnormality and receives a command signal from the another device.

3. The sensor device (2) of claim 1 or 2, further comprising an operating unit (23) configured to receive an operation given by a user, wherein
the notifying unit (24) is configured to notify of the identification information when the abnormality detecting unit (252) detects the abnormality and a predetermined operation is given to the operating unit (23).

4. The sensor device (2) of any one of claims 1 to 3, wherein
the notifying unit (24) is configured to notify of the identification information by voice.

5. The sensor device (2) of claim 1, further comprising a communication unit (21) configured to perform communication with another device, wherein
the abnormality detecting unit (252) is configured to, when the abnormality detecting unit (252) detects an abnormality regarding the communication with the another device, determine whether or not the abnormality regarding the communication is resolved after the notifying unit (24) gives the notification of the identification information.

6. A disaster protection system (100) comprising:
a sensor device (2) of any one of claims 1 to 5;
a receiver (1) configured to perform communication with the sensor device (2) to receive a detection result of the disaster; and
a relay (3) configured to relay the communication between the sensor device (2) and the receiver (1).

7. A notification method to be applied to a sensor device (2) configured to sense an occurrence of a disaster, the notification method comprising:
an abnormality detecting step of detecting an abnormality regarding the sensor device (2); and
a notifying step of notifying of identification information on the sensor device (2) when the abnormality is detected in the abnormality detecting step.

8. A program configured to cause one or more processors to execute the notification method of claim 7.
